# EUROPEAN PATENT APPLICATION

(11) **EP 1 749 705 A2**
(43) Date of publication of application: **07.02.2007**
(21) Application number: 06014165.2
(22) Date of filing: 07.07.2006
(51) Int. Cl.: B60R 21/18

(54) **Air belt and belt apparatus**

(30) Priority: 02.08.2005 JP 2005224296
(71) Applicant: TAKATA CORPORATION, Minato-ku, Tokyo 106-8510 (JP)
(72) Inventor: Kokeguchi, Akira, Tokyo 106-8510 (JP)
(74) Representative: Banzer, Hans-Jörg

(57) **Abstract**

In order to provide an air belt, in which gas leakage from a hole caused by a thread or a needle of a stitching thread in a bag-shaped belt is prevented, and an air belt apparatus using the air belt, an air belt (60) is composed of a folded body (30A) of a bag-shaped belt (30), a cover (40) that surrounds the folded body (30A), and a stitching thread (50). The bag-shaped belt (30) is formed of an overlapped body by means of overlapping two material sheets, (31) and (32), and each of the peripheral edge portions of the material sheets, (31) and (32), in the overlapped body is combined by means of the seam (stitching thread) (33) to form a bag shape. In the folded body (30A), the stitching thread (50) is provided outer edge side from the seam (33).

## Description

### [Technical Field]

The present invention relates to an air belt configured such that a bag-shaped belt is expanded by means of gas supplied from an inflator so that an occupant of a motor vehicle is kept under restraint when the motor vehicle encounters a crash or the like, and more particularly to an air belt in which a folded body of the bag-shaped belt and a cover that surrounds the folded body is integrally formed by means of a stitching thread. In addition, the present invention relates to an air belt apparatus using the air belt.

### [Background Art]

A conventional example of this kind of an air belt and an air belt apparatus (a construction, shown in FIGs. 1 and 6 of Japanese Unexamined Patent Application Publication No. 11-255057) will be explained.

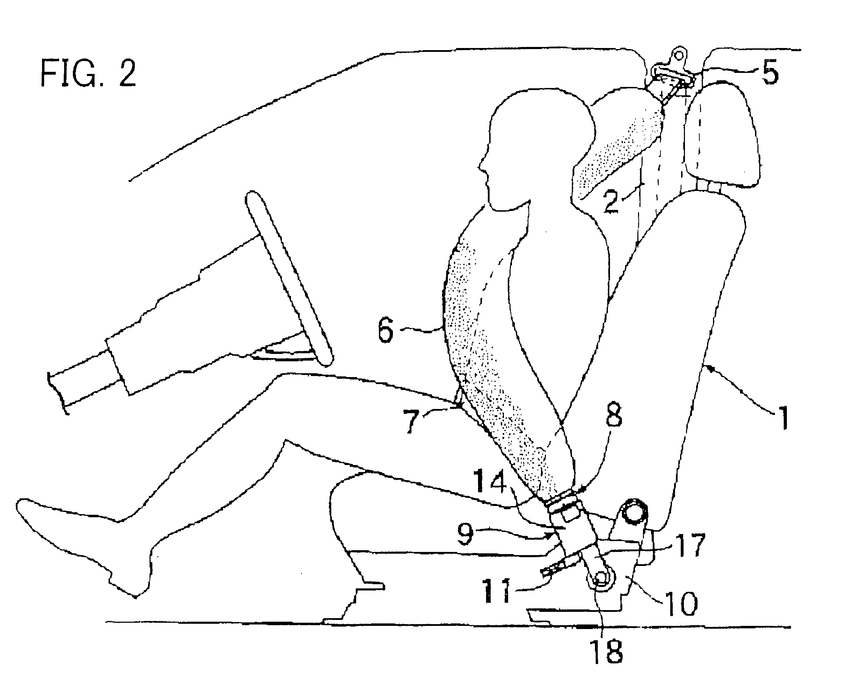

As shown in FIG. 2, an air belt apparatus that keeps an occupant under restraint in a front right seat 1 is provided with a retractor for a shoulder belt provided at a lower part of a center pillar 2, a retractor for a lap belt provided at a lower side of the retractor for the shoulder belt, a shoulder belt 6 being withdrawn from the retractor for the shoulder belt and extending through a slip guide 5 provided at an upper part of the center pillar 2, a lap belt 7 that is withdrawn from the retractor for the lap belt, a tongue device 8 being fixed to each of ends the shoulder belt 6 and the lap belt 7, a buckle device 9 being fixed via attachments 17, 18 to a seat base 10 that is composed of a seat frame or a slide rail, to which the aforementioned tongue device 8 is combined, and an inflator 11 being integrally formed with the buckle device 9.

The retractor for the shoulder belt and the retractor for the lap belt are things that respectively retract the shoulder belt 6 and the lap belt 7 in a manner for the shoulder belt 6 and the lap belt 7 to be able to be withdrawn. When an acceleration sensor does not detect acceleration not less than the predetermined value, namely in normal times, the retractor for the shoulder belt and the retractor for the lap belt permit the aforementioned both belts, 6 and 7, to be withdrawn and thereby permit movement of occupant's body. On the contrary, when the aforementioned acceleration sensor detects the acceleration of not less than the predetermined value in the event of a crash or the like of the motor vehicle, both the retractor for the shoulder belt and that for the lap belt are configured to lock both the belts, 6 and 7, to be unable to be withdrawn so that the occupant is kept under restraint. When the acceleration sensor detects the acceleration not less than the predetermined value, propellant is ignited and the inflator 11 generates high-pressure gas by means of combustion of the propellant.

The lap belt 7 is formed of a usual flat-woven belt made of synthetic resin. On the other hand, part of the shoulder belt 6, which is in contact with a chest region of the occupant, is composed of a cylindrically shaped expandable bag 12 and a webbing 13 that generates tension force in the event of the crash of the motor vehicle while covering an outside of the bag 12. The shoulder belt 6 has a flattened belt-like shape in usual times, however, when the gas is supplied to the bag 12 from the inflator 11 the shoulder belt 6 is expanded and softly keeps the occupant under restraint. When the webbing 13, which is formed by means of warp knitting, is stretched out in a radial direction along with the expansion of the bag 12, the webbing 13 is contracted in a longitudinal direction by just that much and thereby causes initial tension force to the shoulder belt 6.

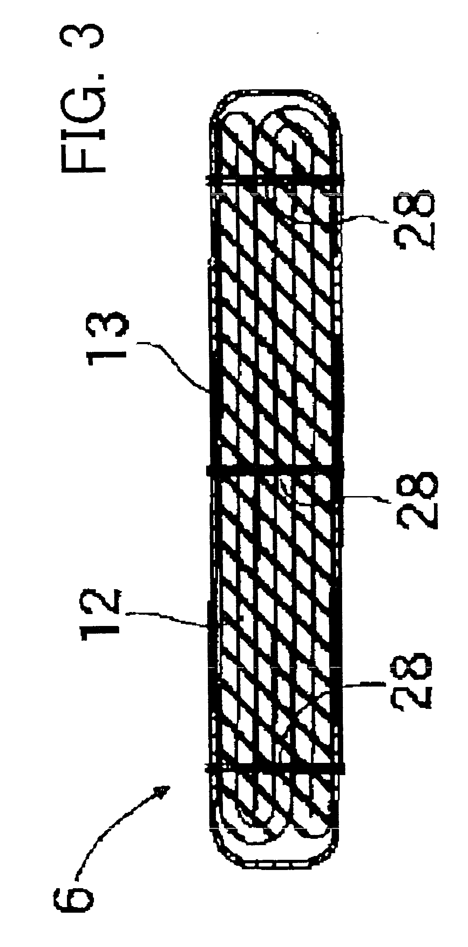

FIG. 3 illustrates a cross-section of the shoulder belt 6 being in a non-expansion state and the bag 12 being folded back in a switchback-like manner is integrally formed with the webbing 13 by means of stitching thread 28, which is easy to rupture.

Since the bag 12 in the folded back state is integrally formed with the webbing 13 by means of the stitching thread 28, the folded state of the bag 12 is kept and movement of the bag 12 relative to the webbing 13 is prevented. As a result, shoulder belt 6 becomes to be formed of a regular flattened shape and softness of the shoulder belt 6 is also kept. Therefore, the feeling of the shoulder belt 6 becomes good and the sense of discomfort received by the occupant is alleviated. In the event of the crash of the motor vehicle, the aforementioned stitching thread 28 is brought to be ruptured and permits the expansion of the bag 12 and the webbing 13.

Operation of the thus constructed air belt apparatus is as follows. When the acceleration sensor detects the acceleration not less than the predetermined value due to the crash of the motor vehicle, the inflator 11 is ignited and high-pressure gas is generated. The generated gas is supplied to the bag 12 of the shoulder belt 6 through a buckle housing 14 and the bag 12 is thereby expanded. When the bag 12 is expanded, the webbing 13 is expanded by pressure and thereby an entire shoulder belt 6 is expanded. As described above, when the shoulder belt 6 is expanded, since a contacting area of the shoulder belt 6 to the chest region of the occupant increases compared to that before the shoulder belt is expanded, the occupant is far more softly kept under restraint.

As described above, when the bag 12 is expanded, since the stitching thread 28 is automatically ruptured by means of the expansion force, there is no possibility that the shoulder belt 6 is disturbed to be freely expanded.

### [Problems to be Solved by the Invention]

As the conventional example described above, when the stitching thread 28 is penetrated through a folded body of the bag-shaped belt (the bag 12 in FIGs. 2 and 3), a hole is caused in the bag-shaped belt by a needle or a thread. Since gas is leaked out from the hole when the air belt is expanded, an inflator having a long gas generating duration time is required to be employed so that the high internal pressure of the air belt is continuously kept, resulting in high cost.

An object of the present invention is to provide an air belt whose gas leakage from a hole caused by a stitching thread or a needle in the bag-shaped belt is prevented, and to provide an air belt apparatus using the air belt.

According to the present invention, this object is achieved by an air belt as defined in claim 1 and an air belt apparatus as defined in claim 6. The dependent claims define preferred and advantageous embodiments of the invention.

### [Means for Solving the Problems]

An air belt according to an aspect of the invention is characterized in including a folded body formed of a bag-shaped belt being folded back into a belt-like shape, expanded by gas to be introduced, a cover capable of stretching for covering the folded body of the bag-shaped belt, and a stitching thread penetrating the cover and the bag-shaped belt, rupturing when the air belt is expanded, in which the bag-shaped belt is formed of an overlapped body by means of overlapping two material sheets, or folding back one material sheet in two, and each of the material sheets is combined by means of a combining portion along a side edge of the overlapped body, and in which the stitching thread penetrates edge portion side of the material sheet from the combining portion.

The air belt according to a preferred embodiment is characterized in that in the air belt the bag-shaped belt is formed of an overlapped body by means of overlapping two belt-shaped material sheets and the combining portion is formed along both side edges of each of the material sheets, and in which the bag-shaped belt is formed of a folded body by means of folding back in a zigzag manner along folding lines extending in a longitudinal direction of the bag-shaped belt in parallel with each other, and in which, in the folded body, both side edges of the bag-shaped belt are overhanging sideward from the overlapped portion of the bag-shaped belt in the folded body, and in which the stitching thread penetrates the overhanging portion of the bag-shaped belt.

An air belt apparatus according to another aspect of the invention is characterized in including an air belt being expandable, and an inflator for expanding the air belt by means of supplying gas into the air belt, in which the air belt is the air belt according to either one of the air belts described above.

In the air belt and the air belt apparatus of the present invention, since the folded body of the bag-shaped belt and the cover surrounding the folded body of the bag-shaped belt are integrally formed by means of the stitching thread, the cover cannot freely move relative to the folded body and thereby the wearing feel of the air belt is good.

In the air belt of the present invention, although the stitching thread is penetrated through an edge portion of the bag-shaped belt, the stitching thread is not penetrated through the expanding part of the bag-shaped belt that is expanded by means of the gas. Therefore, there is no possibility that the gas introduced into the bag-shaped belt is leaked out from the hole caused by means of the stitching needle or the stitching thread. As a result, an inflator continuously generating gas for a long time is not required to be employed.

Incidentally, in the air belt according to the embodiment defined above, since the two side edges of the folded body of the bag-shaped belt are integrally formed with the cover by means of the stitching thread, the wearing feel of the air belt is good.

### [Brief Description of the Drawings]

The invention will now be described in more detail with reference to the accompanying drawings, in which:
FIG. 1(a) is a perspective view illustrating a bag-shaped belt of an air belt with respect to the embodiment, FIG. 1(b) is a cross-section along a B-B line in FIG. 1(a), FIG. 1(c) is a cross-section illustrating the bag-shaped belt being folded back with respect to the embodiment, and FIG. 1(d) is a cross-section illustrating the air belt with respect to the embodiment;
FIG. 2 is a side elevation illustrating a seat of a motor vehicle provided with a conventional air belt apparatus; and
FIG. 3 is a cross-section illustrating a conventional air belt.

### [Best Mode for Carrying Out the Invention]

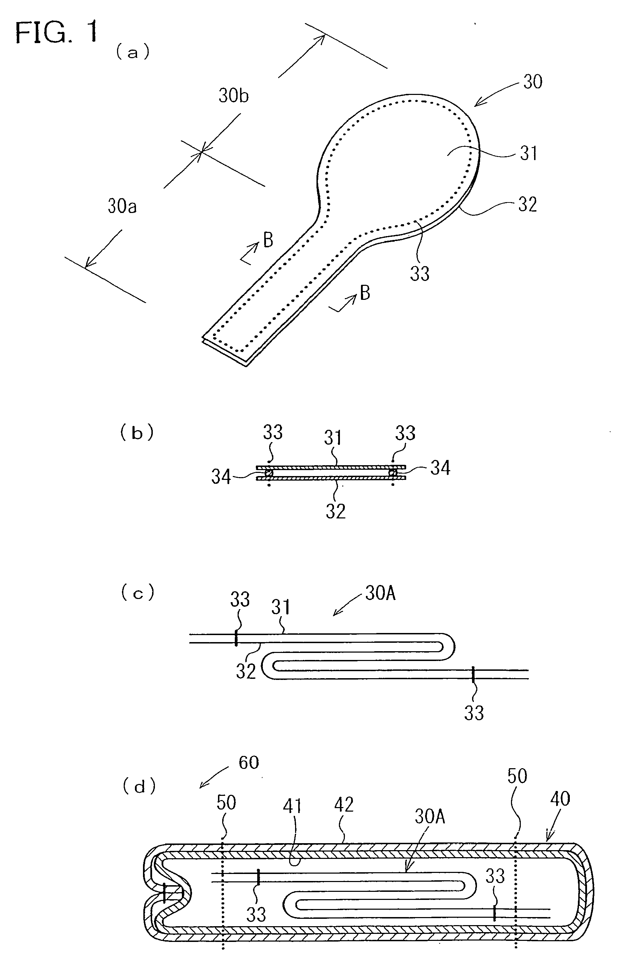

Hereinbelow, the embodiment is explained referring to the drawings. FIG. 1(a) is a perspective view illustrating a bag-shaped belt of an air belt with respect to the embodiment, FIG. 1(b) is a cross-section along a B-B line in FIG. 1(a), and FIG. 1(c) is a cross-section illustrating the air belt with respect to the embodiment.

The air belt 60 is composed of a folded body 30A of a bag-shaped belt 30, a cover 40 that surrounds the folded body 30A, and a stitching thread 50. The bag-shaped belt 30 is formed of an overlapped body by means of overlapping two material sheets, 31 and 32, and each of peripheral edge portions of the material sheets, 31 and 32, in the overlapped body is combined by means of a seam (stitching thread) 33 to form a bag-shape. In addition, a sealing agent 34 is interposed between each of the portions, combined by means of the seam 33, of the material sheets, 31 and 32.

In this embodiment, the bag-shaped belt 30 is composed of a narrow width portion 30a pulled along an abdomen to a chest region of an occupant, and a wide width portion 30b disposed at a side of the occupant.

In the bag-shaped belt 30, the wide width portion 30b is folded back along a folding line in a longitudinal direction in a manner so as to have an even width as that of the narrow width portion 30a, and the entire body thereof is folded back in a zigzag manner (switchback-like manner) along two folding lines to form a folded body 30A, shown in FIG. 1(c). By means of folding the wide width portion 30b along the two folding lines in a zigzag manner, the folded body 30A is folded in three.

In this embodiment, side edge portions of the bag-shaped belt 30 respectively extend toward both sides from the portion of the folded body 3A that is folded in three.

This folded body 30A is surrounded by the aforementioned cover 40. This cover 40 is composed of a mesh cover 41 and a superficial skin cover 42.

Although the mesh cover 41 softly stretches in a width direction, the same hardly stretches in a longitudinal direction at all because heating drawing processing is performed in the longitudinal direction. The mesh cover 41 bears a stretching load applied to the air belt 60.

The superficial skin cover 42 is a thing that causes the contact sensation for a skin of a human body to be soft.

In the cover 40 and the folded body 30A, a stitching thread 50 is provided penetrating through both side edges of the narrow width portion 30a of the bag-shaped belt 30. As illustrated in the drawing, this stitching thread 50 penetrates end edge sides from the seam 33 in the both side edges of the bag-shaped belt 30. By means of providing the stitching thread 50, the cover 40 is prevented from freely moving relative to the bag-shaped belt 30, and the wearing feel of the air belt 60 becomes good.

Incidentally, as for the wide width portion 30b, it is preferable that the same is adhered to the cover 40 by means of adhesive agent.

Although not shown in the drawings, a normal belt is connected to one end side of the air belt 60 in the longitudinal direction, and a tongue is connected to the other end side. A gas-receiving nozzle is provided in the tongue so that the gas from the inflator 11 is able to be introduced into inside of the air belt 60 via the gas receiving nozzle.

When the inflator 11 is activated in a condition in which the tongue is inserted into the buckle, the bag-shaped belt 30 is expanded and the stitching thread 50 is cut. The air belt 60 is thereby expanded along the occupant. At this moment, a length of the mesh cover 41 in the longitudinal direction becomes short and the air belt 60 is firmly attached to the occupant.

In this embodiment, since the stitching thread 50 penetrates outer edge sides from the seam 33 of the bag-shaped belt 30, needle holes or thread holes are not caused in the expanded portion of the bag-shaped belt 30. Therefore, the gas leakage from the bag-shaped belt 30 via the needle holes or thread holes is prevented and internal pressure of the bag-shaped belt 30 can be kept high for a long time.

The above-described embodiment is an example of the present invention and the present invention can take constructions other than that illustrated in the drawings. For example, the length or the shape of the bag-shaped belt is not limited to that illustrated in the drawings. Further, as for the wide width portion 30b, the stitching thread 50 may be penetrated through an expanding portion of the bag-shaped belt 30. In this case, although the gas leaks from the needle holes or the thread holes of the wide width portion 30b, the gas does not leak from the narrow width portion 30a and therefore a gas-leakage amount is reduced.

## Claims

1. An air belt (60) comprising:
a folded body (30A) formed of a bag-shaped belt (30) being folded back into a belt-like shape, expanded by gas to be introduced;
a cover (40) capable of stretching for covering the folded body (30A) of the bag-shaped belt (30); and
a stitching thread (50) penetrating the cover (40) and the bag-shaped belt (30), rupturing when the air belt (60) is expanded,
wherein the bag-shaped belt (30) is formed of an overlapped body by means of overlapping two material sheets (31, 32), or folding back one material sheet in two, and each of the material sheets (31, 32) is combined together by means of a combining portion along a side edge of the overlapped body, and
wherein the stitching thread (50) penetrates edge portion side of the material sheet (31, 32) from the combining portion.

2. The air belt (60) according to Claim 1, wherein the bag-shaped belt (30) is formed of an overlapped body by means of overlapping two belt-shaped material sheets (31, 32) and the combining portion is formed along both side edges of each of the material sheets (31, 32), and
wherein the bag-shaped belt (30) is formed of a folded body (30A) by means of folding back in a zigzag manner along folding lines extending in a longitudinal direction of the bag-shaped belt (30) in parallel with each other, and wherein, in the folded body (30A), both side edges of the bag-shaped belt (30) are overhanging sideward from the overlapped portion of the bag-shaped belt (30) in the folded body (30A), and
wherein the stitching thread (50) penetrates the overhanging portion of the bag-shaped belt (30).

3. The air belt according to Claim 2, wherein a cover surrounds the folded body (30A) and the stitching thread (50) penetrates the cover (40) and the overhanging portion of the bag-shaped belt (30).

4. The air belt according to Claim 1, 2 or 3, wherein a sealing agent (34) is interposed between each of the portions combined by means of a seam (33) of the material sheets (31, 32).

5. The air belt according to any one of Claims 1-4, wherein the bag-shaped belt (30) is composed of a narrow width portion (30a) and a wide width portion (30b).

6. An air belt apparatus comprising:
an air belt (60) being expandable; and
an inflator (11) for expanding the air belt (60) by means of supplying gas into the air belt (60),
wherein the air belt (60) is the air belt (60) according to any one of Claims 1-5.
